# EUROPEAN PATENT SPECIFICATION

(11) **EP 1 073 236 B1**
(45) Date of publication and mention of the grant of the patent: **31.08.2005**
(21) Application number: 00306325.2
(22) Date of filing: 25.07.2000
(51) Int. Cl.: H04L 12/28, H04L 29/06, H04L 12/24, H04N 7/24, H04L 12/64

(54) **Connection managing method of a digital interface**
Verfahren zur Verwaltung von Verbindungen einer digitalen Schnittstelle
Procédé de gestion des connexions d'une interface numérique

(30) Priority: 26.07.1999 KR 9930339
(43) Date of publication of application: 31.01.2001
(73) Proprietor: SAMSUNG ELECTRONICS CO., LTD., Kyungki-do (KR)
(72) Inventor: Kim, Do-hyoung, c/o Samsung Electronics Co. Ltd, Suwon-city, Kyungki-do 442-370 (KR); Seong, Goan-soo, Seocho-gu, Seoul (KR)
(74) Representative: Chugg, David John

(56) References cited:
- ALFONZETTI S ET AL: "A FORMAL DESCRIPTION OF THE DTE PACKET LEVEL IN THE X.25 RECOMMENDATION" ALTA FREQUENZA, UFFICIO CENTRALE AEI-CEI. MILANO, IT, vol. 48, no. 4, August 1979 (1979-08), pages 513-522, XP000813194
- PRINTER WORKING GROUP C (PWG-C) ET AL: "PWG-C proposal to the 1394 Trade Association AV WG: AV/C Managed Asynchronous Serial Bus Connections" 1394 TRADE ASSOCIATION, 7 July 1998 (1998-07-07), XP002215801 Retrieved from the Internet: <URL:http://www.pima.net/standards/it10/me mbers/asynchan_proposal.pdf> [retrieved on 2002-10-04]

## Description

The present invention relates to a connection managing method of a digital interface for performing connection management between digital devices connected through the digital interface, and more particularly, to a connection managing method of a digital interface which, when a point-to-point connection is established among digital devices connected through a digital interface such as the IEEE 1394, enables the concerned device of the point-to-point connection to release this connection.

A plurality of digital devices can be interconnected through a digital interface which conforms to an interface standard such as the IEEE 1394 standard, and a connection managing method between those digital devices is prescribed in the International Electrotechnical Commission (IEC) 61883 standard. According to the IEC 61883 standard, input and output plugs are defined for each digital device as the entry of an incoming bit stream and the exit of an outgoing bit stream, respectively. Further, the input and output plugs are controlled by managing registers such as an output master plug register (oMPR), an output plug control register (oPCR), an input master plug register (iMPR), and an input plug control register (iPCR), so that management of a connection between digital devices can be performed.

A point-to-point connection, which is a kind of connection made among such digital devices, consists of an output plug, an input plug, and a channel therebetween. In the connection, it is defined that an arbitrary device can establish or overlay the connection and that only a device which establishes the connection can break the connection. Establishment or release of the point-to-point connection is performed by managing registers such as oMPR, oPCR, iMPR, and iPCR.

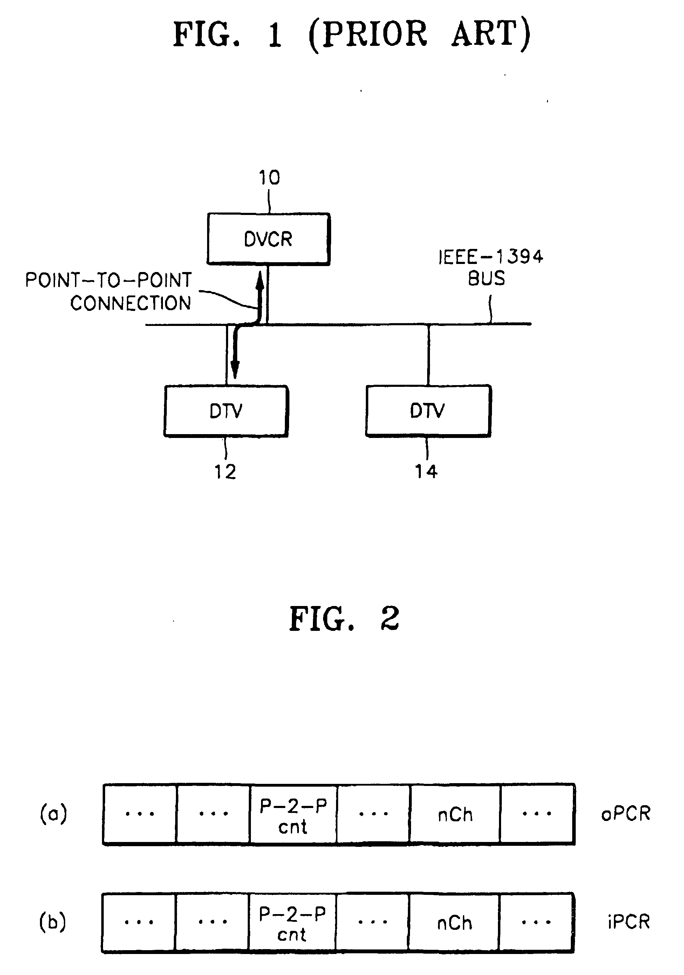

Figure 1 is a diagram for explaining a conventional connection managing method. Figure 2 shows connection related fields of oPCR and iPCR used in the IEC 61883 standard. Referring to Figure 1, a point-to-point connection is established among a DVCR 10, a first DTV 12, and a second DTV 14 by an IEEE 1394 interface. Referring to Figure 2, in devices to which the conventional connection managing method, an output plug control register oPCR shown in (a) and an input plug control register iPCR shown in (b) include the connection related fields P-2-Pcnt and nCh, respectively. If devices having the plug control registers are point-to-point connected, for example, the content of oPCR of the DVCR 10 is oPCR.P-2-P_Connection_Counter(P-2-Pcnt) = 1, oPCR. Channel_Number (nCh) = 33. The content of iPCR of the first DTV 12 is iPCR.P-2-P_Connection_Counter(P-2-Pcnt) = 1, iPCR.Channel_Number(nCh) = 33. Furthermore, if the operation of iPCR and oPCR is performed successfully, a point-to-point connection of the DVCR 10 and the first DTV 12 is said to be established. The IEEE 1394 modules of the DVCR 10 and the first DTV 12 are controlled by a connection establishment information denoting the connection establishment state of such point-to-point connection, thereby allowing the first DTV 12 to receive and see the output content of the DVCR 10.

When a connection is established between the DVCR 10 and the first DTV as described above, if the second DTV 14 is to monitor the output content of the DVCR 10, which is a sink device, the second DTV 14 attempts to establish a point-to-point connection or broadcast-in connection with the DVCR 10 by overlaying the connection on the already established point-to-point connection between the DVCR 10 and the first DTV 12. In the case where a point-to-point connection is overlaid and established between the second DTV 14 and the DVCR 10, the content of oPCR of the DVCR 10 is oPCR.P-2-P_Connection_Counter(P-2-Pcnt) = 2, oPCR.Channel_Number (nCh) = 33. The content of iPCR of the second DTV 12 is iPCR.P-2-P_Connection_Counter(P-2-Pcnt) = 1, iPCR. Channel_Number (nCh) = 33. Similarly, the second DTV 14 controls its own IEEE 1394 module according to such information, which allows it to receive and see the output content of the DVCR 10.

According to the IEC 61883 format, when a point-to-point connection is made, only a device which establishes the connection can release the connection. Thus, a point-to-point connection between DVCR 10 and the first DTV 12 can be released by the first DTV 12. If the first DTV 12 releases the connection to the DVCR 10, the content of oPCR of the DVCR 10 is oPCR.P-2-P_Connection_Counter(P-2-Pcnt) = 0, oPCR.Channel_Number (nCh) = 33. The content of iPCR of the first DTV 12 is iPCR.P-2-P_Connection_Counter(P-2-Pcnt) = 0, iPCR. Channel_Number (nCh) = 33.

If a device other than the first DTV 12 attempts to break the connection between the DVCR 10 and the first DTV 12, the concerned devices do not allow such an attempt to be made because the attempt does not comply with the relevant format. Similarly, if a device other than the second DTV 12 attempts to break the connection between the DVCR 10 and the second DTV 12, the concerned devices do not permit such attempt because of nonconformity to the format. These particulars are specified in IEC 61883, and all devices that desire to transmit audio-video contents as an isochronous bit stream must follow this format.

In the same context, according to a connection managing method of a digital interface according to the conventional art, for example, if a third party device establishes a point-to-point connection between first and second devices, the connection cannot be released by any device other than the third party device. In the above example, if the first DTV 12, which is the concerned connected device, attempts to connect an input plug used in the connection to another device, since the input plug is already point-to-point connected to the DVCR 10, the first DTV 12 cannot break the connection so long as the second DTV 14 does not do so. Eventually, the first DTV 12 encounters a problem in that a considerable part of its operation depends on the operation of the second DTV 14. Furthermore, if the second DTV 14 does not operate as desired by the first DTV 12, the second DTV 14 cannot perform its own desired operation.

For instance, it is assumed that, when digital-video home system (D-VHS), DTV, and digital versatile disk (DVD) are connected to an IEEE 1394 network, a user converts D-VHS to a reproducing mode, and thus D-VHS establishes a point-to-point connection with DTV which is its own default display device. Furthermore, it is assumed that the user desires to watch DVD in the middle of watching D-VHS to select DVD as a source on the DTV screen by operating source select screen of the DTV. In this case, despite the fact that the user intends to break away from D-VHS content and to see the DVD content instead, the DTV cannot actually carry out such operation.

In order to perform the operation, the DTV must break a point-to point connection between its own input plug and D-VHS's output plug to thereafter establish a new connection between its own input plug and DVD's output plug. However, since the point-to-point connection is established by the D-VHS, the DTV has no authority to break the connection. Thus, the user's request to watch DVD on the DTV screen is not satisfied. According to a connection managing method of a digital interface according to the conventional art, for example, it creates much inconvenience in that the concerned connected device cannot break the connection.

With a view to solve or reduce the above problems, it is an aim of preferred embodiments of the present invention to provide a connection managing method of a digital interface in which, when a point-to-point connection is established among digital devices interconnected through a digital interface such as IEEE 1394, the concerned device of the point-to-point connection can break the connection.

According to a first aspect, the present invention provides a connection managing method of a digital interface conforming to IEEE 1394 for performing a connection management on a plurality of devices which are point-to-point connected through a digital interface, the method comprising the steps of :(a) a second device, operable to establish a point-to-point connection between an arbitrary first device and a third device, receiving a connection release request command requesting the second device to break the point-to-point connection from the first device; (b) the second device breaking the point-to-point connection in response to the connection release request command, and characterised in that prior to the step (b), the method further comprises the step of: (b-1) the second device analyzing the connection release request command to determine whether the point-to-point connection is a point-to-point connection previously established by itself, wherein the step (b) comprises the step of: (b') if it is determined that the point-to-point connection is a point-to-point connection previously established by the second device, the second device breaking the point-to-point connection; and wherein the step (b') comprises the steps of: (b'-1) if it is determined that the point-to-point connection is a point-to-point connection previously established by the second device, a user of one of the first and third devices determining whether to break the point-to-point connection by the second device; (b'-2) if the user determines to break the connection in the step (b'-1), the second device breaking the point-to-point connection established between the first device and the third device; and (b'-3) if the user determines not to break the connection in the step (b'-1), the second device maintaining the point-to-point connection established between the first device and third device.

Furthermore, the step (b'-1) preferably includes the steps of (b'-1-1) if the point-to-point connection is determined to be a point-to-point connection previously established by the second device, the second device indicating whether to break the point-to-point connection on a predetermined display device, and (b'-1-2) the second device receiving a determination on whether to break the point-to-point connection by the second device from the user. In this case, the connection release request command preferably includes a plug type field which indicates the plug type of the first device in the presently established point-to-point connection, and a plug identification field which indicates the plug identifier of the first device as an operand. Furthermore, the connection release request command is preferably an audio-video control command defined within an audio-video control command transaction set, and the digital interface preferably conforms to the IEEE 1394 standard.

For a better understanding of the invention, and to show how embodiments of the same may be carried into effect, reference will now be made, by way of example, to the accompanying diagrammatic drawings in which:
Figure 1 is a diagram for explaining a conventional connection management method;
Figure 2 is a diagram showing connection related fields of output plug control register (oPCR) and input plug control register (iPCR) used in the standard of International Electro technical Commission (IEC) 61883;
Figure 3 is a flowchart showing a connection managing method of a digital interface according to an embodiment of the prevent invention; and
Figure 4 is a diagram for explaining a connection managing operation according to the method of Figure 3.

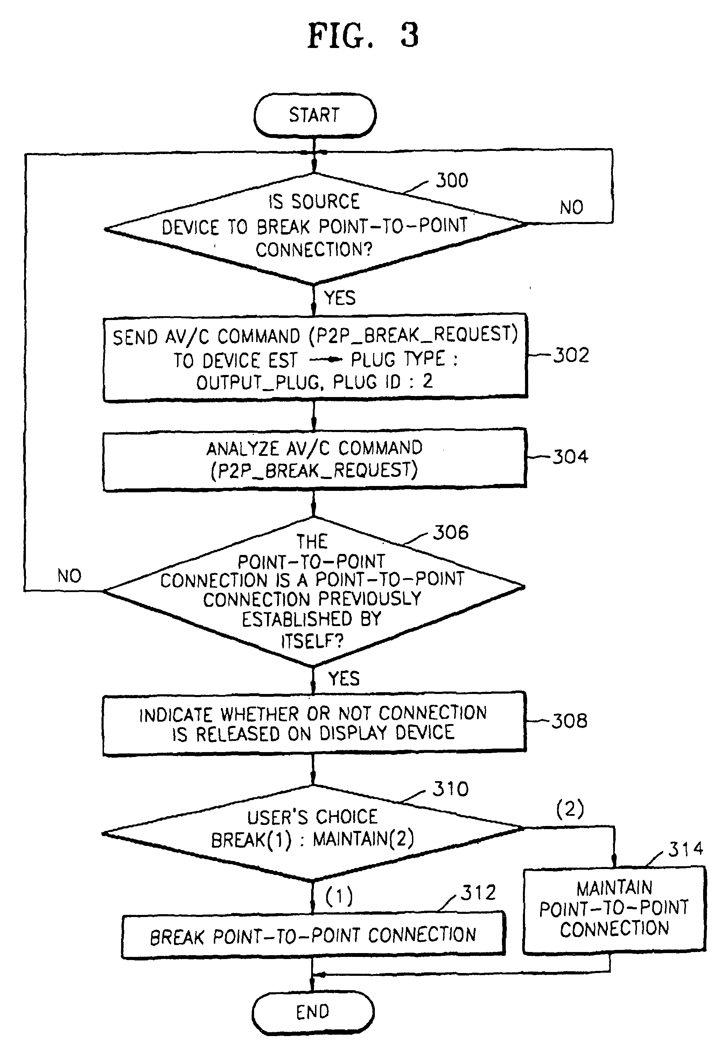

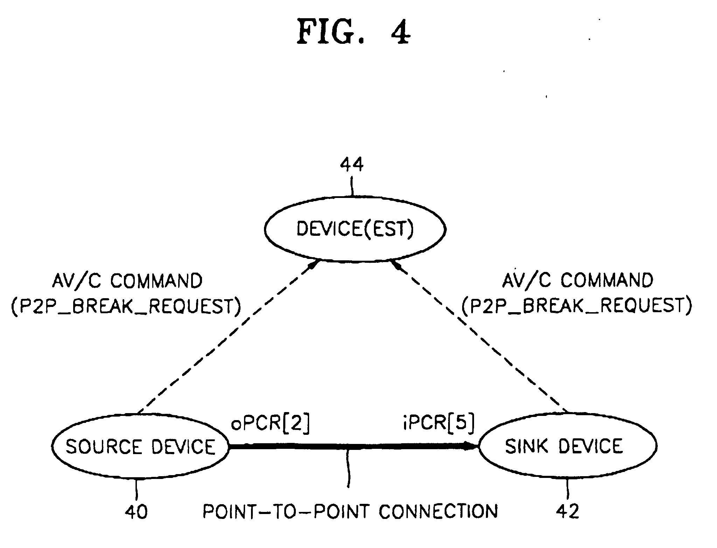

Referring to Figure 3 and 4, in the first place, it is assumed that a point-to-point connection is made between a source device 40 and a sink device 42 through an output plug No. ID 2 of the source device 40 and an input plug ID No. 5 of the sink device 42. The point-to-point connection is established by a device EST 44. If a user determines that a source device 40 desires to break the point-to-point connection (step 300), the source device 40 sends the device EST 44, which establishes the point-to-point connection, a command P2P_Break_Request requesting another device to break a point-to-point connection to which the source device 40 is currently connected (step 302). In an embodiment of the present invention, the command P2P_Break_Request uses an audio-video control (AV/C) command defined in an AV/C command transaction set (AV/C CTS). Furthermore, the AV/C command includes a plug type field indicating whether the plug is an output or input plug, and a plug identification (ID) denoting a plug identifier as an operand.

According to the embodiment, the plug type field is established in such a way as to indicate an output plug OUTPUT_PLUG corresponding to the plug type of the source device 40 in the currently established point-to-point connection. The plug ID field is established in such a way as to indicate 2 corresponding to the plug identifier of the source device 40 in the currently established point-to-point connection.

As described above, if the source device is to break the point-to-point connection, the source device 40 requests the device EST 44, which establishes the point-to-point connection, to release the point-to-point connection, using the command P2P_Break_Request which is supposed to demand a break in the point-to-point connection to which the source device 40 is currently related. In other words, the source device 40 establishes the operands of the command as PlugType = OUTPUT_PLUG and Plug ID = 2 to forward the command P2P_Break_Request (OUTPUT_PLUG, 2) to the device EST 44.

Next, the device EST 44 analyzes the AV/C command P2P_Break_Reqeust (step 304). Then, the device EST 44 determines whether the point-to-point connection is a point-to-point connection previously established by itself, based on the result of analysis made in the step 304 (step 306). If it is determined that the point-to-point connection is a point-to-point connection previously established by itself in the step 306, the device EST 44 indicates whether to break the connection or not, in a display device such as an on screen display (OSD) (step 308). The user determines whether he or she will break the connection according to the indication on the display device (step 310).

If the user chooses to break the connection ((1)), the device EST 44, which established the point-to-point connection, breaks the point-to-point connection established between the source device 40 and the sink device 42 (step 312). On the other hand, if the user does not choose to break the connection ((2)), the device EST 44 maintains the point-to-point connection between the source device 40 and the sink device 42 (step 314).

In another case, if the sink device 42 is to break the point-to-point connection, then the sink device 42 requests the device EST 44 to release the point-to-point connection, using the command P2P_Break_Request which is supposed to demand a break in the point-to-point connection to which the source device 40 is currently related. In other words, the source device 40 establishes the operands of the command as PlugType = INPUT_PLUG and Plug ID = 5 to forward the command P2P_Break_Request (INPUT_PLUG, 5) to the device EST 44. When the command P2P_Break_Request is received from an external device, the device EST analyzes the plug type and plug ID to determine whether or not the point-to-point connection is a point-to-point connection previously established by itself. If it is determined that the point-to-point connection is a point-to-point connection previously established by itself, the device EST 44 indicates whether or not to break the connection, and the user determines whether he or she will break the connection depending on the indication on the display device.

If the user chooses to break the connection, the device EST 44, which previously established the point-to-point connection, breaks the point-to-point connection established between the source device 40 and the sink device 42 (step 312). On the other hand, if the user does not choose to break the connection ((2)), the device EST 44 maintains the point-to-point connection between the source device 40 and the sink device 42 (step 314).

Therefore, according to the connection managing method of the digital interface described above, if a plurality of devices are connected through a point-to-point connection, the concerned device of the point-to-point connection can break the connection. Accordingly, since a point-to-point connection can be released at the request of a device other than the device which establishes the connection, efficiency of connection management can be enhanced.

Meanwhile, the above method may be embodied as a computer program which can be executed on a computer including a microprocessor or processor. Further, the program can be stored in a recording medium such as a magnetic recording medium or an optical recording medium. Preferably, the program can be held in a memory such as read-only memory (ROM) or flash memory. In addition, the program can be scattered within the devices connected by a digital interface to be stored and executed thereon.

A flash memory, in which a program for implementing the above method is stored, and a microprocessor, which reads out the program from the flash memory to execute it, constitute a firmware for performing a control operation on devices connected to a digital interface. Further, the control operation performed by a firmware acts as a software such as a protocol performed between devices linking through a digital interface, as understood by a person skilled in the art.

Further, although the embodiments are described with reference to use of a command defined in AV/C CTS as a specific command, it is exemplary only, and it is possible to use a command defined in other kinds of control protocols such as home wide web (HWW), home audio/video interoperability (HAVi), computer-assisted learning (CAL), and EHS. In other words, the present invention is not restricted to the embodiments nor can the embodiments limit the scope of the invention as defined by the appended claims.

As described in the foregoing, when a plurality of devices are point-to-point connected by a digital interface, a connection managing method of a digital interface according to the present invention enables the concerned device of the point-to-point connection to break the connection, thereby allowing for enhanced connection management efficiency.

## Claims

1. A connection managing method of a digital interface conforming to IEEE 1394 for performing a connection management on a plurality of devices which are point-to-point connected through a digital interface, the method comprising the steps of :
(a) a second device, operable to establish a point-to-point connection between an arbitrary first device and a third device, receiving a connection release request command requesting the second device to break the point-to-point connection from the first device;
(b) the second device breaking the point-to-point connection in response to the connection release request command, and **characterised in that** prior to the step (b), the method further comprises the step of:
(b-1) the second device analyzing the connection release request command to determine whether the point-to-point connection is a point-to-point connection previously established by itself,
wherein the step (b) comprises the step of:
(b') if it is determined that the point-to-point connection is a point-to-point connection previously established by the second device, the second device breaking the point-to-point connection; and
wherein the step (b') comprises the steps of:
(b'-1) if it is determined that the point-to-point connection is a point-to-point connection previously established by the second device, a user of one of the first and third devices determining whether to break the point-to-point connection by the second device;
(b'-2) if the user determines to break the connection in the step (b'-1), the second device breaking the point-to-point connection established between the first device and the third device; and
(b'-3) if the user determines not to break the connection in the step (b'-1), the second device maintaining the point-to-point connection established between the first device and third device.

2. The method of claim 1, wherein the step (b'-1) comprises the steps of:
(b'-1-1) if the point-to-point connection is determined to be a point-to-point connection previously established by the second device, the second device indicating whether to break the point-to-point connection on a predetermined display device; and
(b'-1-2) the second device receiving a determination on whether to break the point-to-point connection by the second device from the user.

3. The method of any preceding claim, wherein the connection release request command includes a plug type field which indicates the plug type of the first device in the presently established point-to-point connection, and a plug identification field which indicates the plug identifier of the first device as an operand.

## Patentansprüche

1. Verbindungs-Verwaltungsverfahren einer digitalen Schnittstelle, die IEEE 1394 entspricht, zum Durchführen einer Verbindungsverwaltung einer Vielzahl von Vorrichtungen, die durch eine digitale Schnittstetle Punkt-zu-Punkt verbunden sind, wobei das Verfahren die folgenden Schritte umfasst:
(a) eine zweite Vorrichtung, die imstande ist, eine Punkt-zu-Punkt-Verbindung zwischen einer beliebigen ersten Vorrichtung und einer dritten Vorrichtung herzustellen, empfängt einen Verbindungsfreigabe-Anforderungsbefehl, der die zweite Vorrichtung auffordert, die Punkt-zu-Punkt-Verbindung von der ersten Vorrichtung zu trennen;
(b) die zweite Vorrichtung trennt die Punkt-zu-Punkt-Verbindung als Reaktion auf den Verbindungsfreigabe-Anforderungsbefehl, und **dadurch** gekennzeichnert, dass vor dem Schritt (b) das Verfahren weiter den folgenden Schritt umfasst:
(b-1) die zweite Vorrichtung analysiert den Verbindungsfreigabe-Anforderungsbefehl, um festzustellen, ob die Punkt-zu-Punkt-Verbindung eine vorher durch sie selbst hergestellte Punkt-zu-Punkt-Verbindung ist,
wobei der Schritt (b) den folgenden Schritt umfasst:
(b') wenn festgestellt wird, dass die Punkt-zu-Punkt-Verbindung eine vorher durch die zweite Vorrichtung hergestellte Punkt-zu-Punkt-Verbindung ist, trennt die zweite Vorrichtung die Punkt-zu-Punkt-Verbindung, und
wobei der Schritt (b') die folgenden Schritte umfasst:
(b'-1) wenn festgestellt wird, dass die Punkt-zu-Punkt-Verbindung eine vorher durch die zweite Vorrichtung hergestellte Punkt-zu-Punkt-Verbindung ist, bestimmt ein Benutzer der ersten oder dritten Vorrichtung, ob die Punkt-zu-Punkt-Verbindung durch die zweite Vorrichtung zu trennen ist;
(b'-2) wenn der Benutzer bestimmt, die Verbindung in Schritt (b'-1) zu trennen, trennt die zweite Vorrichtung die zwischen der ersten Vorrichtung und der dritten Vorrichtung hergestellte Punkt-zu-Punkt-Verbindung, und
(b'-3) wenn der Benutzer bestimmt, die Verbindung in Schritt (b'-1) nicht zu trennen, erhält die zweite Vorrichtung die zwischen der ersten Vorrichtung und der dritten Vorrichtung hergestellte Punkt-zu-Punkt-Verbindung aufrecht.

2. Verfahren nach Anspruch 1, wobei der Schritt (b'-1) die folgenden Schritte umfasst:
(b'-1-1) wenn festgestellt wird, dass die Punkt-zu-Punkt-Verbindung eine vorher durch die zweite Vorrichtung hergestellte Punkt-zu-Punkt-Verbindung ist, zeigt die zweite Vorrichtung auf einer vorbestimmten Anzeigevorrichtung an, ob die Punkt-zu-Punkt-Verbindung zu trennen ist, und
(b'-1-2) die zweite Vorrichtung empfängt von dem Benutzer eine Entscheidung dahin gehend, ob die Punkt-zu-Punkt-Verbindung durch die zweite Vorrichtung zu trennen ist.

3. Verfahren nach einem der vorangehenden Anprüche, wobei der Verbindungsfreigabe-Anforderungsbefehl ein Steckertypfeld, das den Steckertyp der ersten Vorrichtung in der gegenwärtig hergestellten Punkt-zu-Punkt-Verbindung angibt, und ein Stecker-Identifikationsfeld enthält, das den Stecker-Identifikator der ersten Vorrichtung als einen Operanden angibt.

## Revendications

1. Procédé de gestion des connexions d'une interface numérique conformément à l'IEEE 1394 pour effectuer une gestion des connexions sur une pluralité de dispositifs qui sont connectés point-à-point via une interface numérique, le procédé comportant les étapes consistant en ce que :
(a) un deuxième dispositif, opérationnel pour établir une connexion point-à-point entre un premier dispositif arbitraire et un troisième dispositif, reçoive une instruction de demande de libération de connexion demandant au deuxième dispositif d'interrompre la connexion point-à-point depuis le premier dispositif,
(b) le deuxième dispositif interrompe la connexion point-à-point en réponse à l'instruction de demande de libération de connexion, et **caractérisé en ce que** préalablement à l'étape (b), le procédé comporte en outre l'étape consistant **en ce que** :
(b-1) le deuxième dispositif analyse l'instruction de demande de libération de connexion pour déterminer si la connexion point-à-point est une connexion point-à-point précédemment établie par lui-même,
l'étape (b) comportant l'étape consistant **en ce que** :
(b') s'il est déterminé que la connexion point-à-point est une connexion point-à-point précédemment établie par le deuxième dispositif, le deuxième dispositif interrompe la connexion point-à-point, et
l'étape (b') comportant les étapes consistant **en ce que** :
(b'-1) s'il est déterminé que la connexion point-à-point est une connexion point-à-point précédemment établie par le deuxième dispositif, un utilisateur de l'un des premier et troisième dispositifs détermine s'il faut interrompre la connexion point-à-point par l'intermédiaire du deuxième dispositif,
(b'-2) si l'utilisateur détermine d'interrompre la connexion à l'étape (b'-1), le deuxième dispositif interrompe la connexion point-à-point établie entre le premier dispositif et le troisième dispositif, et
(b'-3) si l'utilisateur détermine de ne pas interrompre la connexion à l'étape (b'-1), le deuxième dispositif conserve la connexion point-à-point établie entre le premier dispositif et le troisième dispositif.

2. Procédé selon la revendication 1, dans lequel l'étape (b'-1) comporte les étapes consistant en ce que :
(b'-1-1) si la connexion point-à-point est déterminée comme étant une connexion point-à-point précédemment établie par le deuxième dispositif, le deuxième dispositif indique s'il faut interrompre la connexion point-à-point sur un dispositif d'affichage prédéterminé, et
(b'-1-2) le deuxième dispositif reçoive une détermination indiquant s'il faut interrompre la connexion point-à-point par l'intermédiaire du deuxième dispositif en provenance de l'utilisateur.

3. Procédé selon l'une quelconque des revendications précédentes, dans lequel l'instruction de demande de libération de connexion inclut un champ de type fiche d'alimentation qui indique le type de fiche d'alimentation du premier dispositif dans la connexion point-à-point actuellement établie, et un champ d'identification de fiche d'alimentation qui indique l'identifiant de fiche d'alimentation du premier dispositif en tant qu'opérande.
